# EUROPEAN PATENT APPLICATION

(11) **EP 1 541 449 A1**
(43) Date of publication of application: **15.06.2005**
(21) Application number: 02738862.8
(22) Date of filing: 28.06.2002
(51) Int. Cl.: B62D 25/00

(54) **BODY REINFORCING MATERIAL ARRANGEMENT STRUCTURE**

(71) Applicant: Hayashi-Sika Automotive Ltd., Nagoya-shi, Aichi 460-0003 (JP)
(72) Inventor: IGARASHI, Michiya c/o Hayashi-Sika Automotive Ltd., Nagoya-shi, Aichi 460-0003 (JP); BAMBA, Kenichi c/o Hayashi-Sika Automotive Ltd., Nagoya-shi, Aichi 460-0003 (JP)
(74) Representative: Isler, Jörg
(86) International application number: PCT/JP2002/006572
(87) International publication number: WO 2004/002809

(57) **Abstract**

A body reinforcing material arrangement structure, comprising reinforcing materials disposed in a car structure formed by the combination of the panels forming the body of a car or in the body, the reinforcing material further comprising a platy support body having a portion disposed apart a specified distance from the panel along the internal surface of the panel at least partially and a resin formed body having heat-foaming capability disposed between the portions of the platy support body disposed along the panel and the panel, wherein the resin formed body is so disposed as to be supported on the platy support body before foaming, positioned apart a clearance from the inner surface of the panel, and after forming, filled between the platy support body and the panel so as to be fitted to the panel.

## Description

### TECHNICAL FIELD

The invention relates to a body reinforcing material arrangement structure that is constructed by disposing reinforcements in a vehicle body or a vehicular structural element formed by combining two or more panels.

### BACKGROUND ART

In a vehicle body, as a method of reinforcing a vehicle body or a vehicular structural element (e.g., a pillar or the like) formed by combining at least two vehicle body members (vehicle body panels) constituting the vehicle body, namely, an inner panel and an outer panel, it has been known to fill a space between an R/F (reinforce) and an outer steel plate with a foamed filler as a reinforcement. According to one previously known method, the foamed filler fills the entire interior of a vehicular structural element or a vehicle body. According to another previously known method, the foamed filler fills the interior of a vehicular structural element section or a vehicle body section defined by a support member that is made, for example, of nylon.

Such previously known arts are disclosed in detail, for example, in Published Patent No. W096/07016 (Japanese Patent Official Gazette No. 11-505777) and Japanese Patent Application Laid-Open No. 3-208777 (Registered Patent No. 2748683). In these previously known arts, a section of a closed space of a pillar or the like formed by a vehicle body panel is partitioned off, and a hard foamed filler is disposed in the section thus partitioned off. This reinforcing method makes it possible to increase the rigidity of a framework of the body and the flexural rigidity of the vehicle body panel without substantially increasing the weight of the vehicle.

In the body reinforcing material arrangement structure as described herein, it is preferable that a structural body for disposing reinforcements such as a pillar or the like exhibit high tenacity to be gradually destroyed by a bending stress instead of yielding thereto all of a sudden. The safety in case of an automobile collision can thereby be enhanced. Further, it is desirable to be able to achieve high rigidity and high tenacity while preventing the weight of the body from substantially increasing due to the disposition of reinforcements. In other words, it is desirable to dispose the reinforcements efficiently enough to achieve an enhancement in rigidity and tenacity.

In another previously known art, it is known to use a foamed filler that foams at a temperature for antirust liquid immersion treatment (ED liquid impregnation treatment) that is obligatorily carried out in a process of painting vehicle body panels. The use of such a foamed filler is preferred because of its capability to increase the efficiency in manufacturing the body.

In the previously known methods, however, it seems that no detailed consideration has been given to the above-mentioned idea of efficiently disposing the reinforcements with a view to enhancing rigidity and tenacity. Accordingly, the disposition of the reinforcements cannot be regarded as perfect.

In the previously known methods, at the beginning of a manufacturing process preceding the aforementioned antirust liquid immersion treatment, the foamed filler in its pre-foaming state is disposed with one face thereof being bonded to or held in close contact with an inner face of the vehicle body panel. In this method, during an immersion process, antirust liquid cannot come into contact with the inner face of the vehicle body panel with which the foamed filler is in contact, so that the inner face cannot be immersed in the antirust liquid. It has been revealed, as a result, that rust is formed on the inner face as time elapses. If rust is thus formed, the adhesive force between the foamed filler and the vehicle body panel decreases. Consequently, the effect of enhancing rigidity and tenacity is weakened by disposing the foamed filler. There is also a concern that an adverse effect such as generation of harmful noise will be produced.

### DISCLOSURE OF THE INVENTION

It is an object of the invention to provide a body reinforcing material arrangement structure that makes it possible to enhance rigidity and tenacity of a vehicular structural element or a vehicle body to an extent sufficient to enhance the degree of safety in case of an automobile collision while preventing the weight of the vehicular structural element or the vehicle body from substantially increasing due to the disposition of reinforcements.

To achieve this object, the inventor disposed a foamable resin-molded element as a foamed filler serving as a reinforcement in a vehicular structural element or a vehicle body, conducted a thorough test on the bending fracture thereof, and analyzed results obtained from the test. In consequence, the inventor came to elucidate a body reinforcing material arrangement structure which is lightweight but highly rigid and which is fairly safely destroyed by a bending stress, namely, which is gradually and tenaciously destroyed by a bending stress without yielding thereto all of a sudden. Besides, in this body reinforcing material arrangement structure, the excellent characteristics as mentioned above can be obtained by minimizing the number of reinforcements to be disposed, namely, by disposing the reinforcements efficiently.

That is, the inventor has found out that the following requisites are important in constituting a body reinforcing material arrangement structure having the excellent characteristics as mentioned above.
1. From the standpoint of enhancing rigidity and tenacity, it is important to use a resin-molded element that especially exhibits a high compressive strength and a high shearing strength as physical characteristic values. More specifically, it is preferable that the compressive strength be equal to or higher than 10MPa, and that the shearing strength be equal to or higher than 1MPa. By setting these physical characteristic values equal to or higher than 10MPa and 1MPa
   respectively, the inventor confirmed through an experiment that the effect of reinforcing a body can be obtained sufficiently. In addition, it is also preferable that Young's modulus be set as a large value.
   In the aforementioned experiment, an evaluation on compressive strength was made by applying a compressive force to a cylindrical test piece of a diameter of 30mm x a height of 30mm at a compressive speed of 20mm/min. An evaluation on shearing strength was made by applying a shearing force to a test piece of an area of 625mm² (25x25mm) and a thickness of 1mm to 6mm at a shearing speed of 50mm/min.
2. If the resin-molded element is so disposed as to enhance a geometrical moment of inertia of the vehicular structural element or the vehicle body, it is possible to achieve efficient enhancement of rigidity and tenacity. That is, for example, in the case where a resin-molded element of a constant weight is disposed, it is preferable that the resin-molded element be disposed as far from a center axis as possible.
   Even if the resin-molded element is simply increased in thickness, the geometrical moment of inertia is not enhanced for an increase in weight. Even if the thickness of the resin-molded element is increased to a certain value or more, a substantial enhancement of rigidity and tenacity cannot be expected. The inventor confirmed this fact through an experiment and reached a conclusion that the thickness of the resin-molded element to be disposed preferably ranges from 1mm to 4mm and more preferably equals 4mm.
   In general, a hard resin-molded element satisfying the characteristic conditions mentioned above in Item 1 is much lower in tensile strength than in compressive strength. Thus, it has been revealed anew that the effect of enhancing rigidity and tenacity is not striking even if the resinmolded element is disposed in a portion to which a tensile force is applied during deformation of the vehicle body.
3. In a fmal state of disposition in the vehicle, namely, in a post-foaming state, it is preferable that the surface of the resin-molded element be disposed in close contact with a vehicle body panel forming the vehicular structural element or the vehicle body over the widest possible area thereof. It is preferable that a great adhesive force under shear act between the resin-molded element and the vehicle body panel that are thus in close contact with each other. By satisfying these conditions, the rigidity and tenacity of the vehicle body can be enhanced significantly.
   In this connection, with a view to preventing the adhesive force under shear from decreasing with the lapse of time, it is preferable that the portion of the vehicle body panel which is in close contact with the resin-molded element be treated by being immersed in antirust liquid in a painting process. Formation of rust on the adhesive portion of the vehicle body panel can thereby be prevented, and a great adhesive force under shear can be maintained over a long period of time. To ensure that the inner face of the vehicle body panel which is in close contact with the resinmolded element is immersed in antirust liquid during the painting process as described above, the resin-molded element in its pre-foaming state needs to be disposed apart from the inner face of the vehicle body panel by a small gap.
4. As described in the above-mentioned Item 1, the resin-molded element that is hard because of high compressive strength and high shearing strength is fragile in general. If this resin-molded element is greatly deformed, it tends to be destroyed. That is, as such a resin-molded element as a single piece is deformed, cracks start to appear therein. Finally, the resin-molded element can no longer maintain its shape. This may lead to an abrupt decrease in the strength of the vehicle body or the vehicular structural element where the resin-molded element is disposed. Hence, in the case where such a resin-molded element is used as a reinforcement for the vehicle body, it is preferable that the interior of the vehicular structural element or the vehicle body be partitioned, and that a thin plate-shaped support element which exhibits excellent elongation properties and which greatly flexes without being destroyed be used to hold the resin-molded element in a partitioned space adjacent to the inner face of the vehicle body panel. When the vehicle body is deformed, the plate-shaped support element as mentioned herein is not destroyed but deformed in accordance with deformation of the vehicle body. The plate-shaped support element thus maintains a state where the resin-molded element is held in the space adjacent to the inner face of the vehicle body panel. Thus, even if cracks have appeared in the resin-molded element, the resin-molded element can be held in close contact with the vehicle body panel, and it is possible to maintain a state where an applied stress is transmitted to the inside of the resin-molded element and then dispersed. Accordingly, the use of such a plate-shaped support element makes it possible to keep the rigidity of the vehicular structural element or the vehicle body high over a long period in a deformation process of the vehicle body.

In a body reinforcing material arrangement structure of the invention which is constructed on the basis of the knowledge described hitherto, a reinforcement is composed of a plate-shaped support element and a resin-molded element. The plate-shaped support element extends at least partially along an inner face of a panel constituting a vehicular structural element or a vehicle body, and has a portion disposed in such a manner as to be spaced apart from the panel by a predetermined distance. The resin-molded element exhibits hot-state foamability, and is disposed between the panel and the portion of the plate-shaped support element which is disposed along the panel. The resin-molded element in its post-foaming state fills up a space between the plate-shaped support element and the panel, and is in close contact with the panel.

By thus disposing the resin-molded element in close contact with the panel, the rigidity and tenacity of the vehicular structural element or the vehicle body can be enhanced. Furthermore, the plate-shaped support element holds the resin-molded element in a region facing the panel. Thereby, even if the vehicular structural element or the vehicle body has been deformed greatly, the resin-molded element can be held in close contact with the panel. The rigidity of the vehicular structural element or the vehicle body is held high by the resin-molded element over a long period in the course of deformation of the vehicular structural element or the vehicle body. Namely, the tenacity of the vehicular structural element or the vehicle body can be enhanced. Thus, according to the construction of the invention, upon receiving a bending stress, the vehicular structural element or the vehicle body does not yield thereto all of a sudden but is tenaciously destroyed. The degree of safety in case of an automobile collision can thereby be enhanced considerably.

The resin-molded element is provided in the region adjacent to the panel, whereby the rigidity and tenacity of the vehicular structural element or the vehicle body can be enhanced efficiently. That is, according to the construction of the invention, the rigidity and tenacity of the vehicular structural element or the vehicle body can be enhanced substantially using a small amount of the resin-molded element, namely, without substantially increasing the weight of the vehicular structural element or the vehicle body.

In the body reinforcing material arrangement structure of the invention, the resin-molded element in its pre-foaming state is supported on the plate-shaped support element and is located apart from the inner face of the panel by a gap. According to this construction, during antirust liquid impregnation treatment, antirust liquid can be brought into contact with the inner face of the panel which is in close contact with the resin-molded element in its post-foaming state, and it is easy to subject the inner face of the panel to antirust liquid impregnation treatment. This implementation of antirust liquid impregnation treatment makes it possible to prevent rust from being formed on the face that is in close contact with the resin-molded element with the lapse of time, and to prevent the adhesive force between the resin-molded element and the panel from decreasing due to rust. Thus, according to this construction, the rigidity and tenacity of the vehicular structural element or the vehicle body can be held high over a long period.

In the body reinforcing material arrangement structure of the invention, the resin-molded element and the plate-shaped support element can be integrally formed by insert molding. It is also appropriate that the resin-molded element and the plate-shaped support element be formed as separate pieces and be fixed to each other by means of engaging strips that engage them respectively. Thus, the resin-molded element and the plate-shaped support element are fixed to each other in advance, whereby the resin-molded element in its pre-foaming state and the inner face of the vehicle body panel can be stably held apart from each other by a gap. As a result, the inner face of the vehicle body panel can be appropriately subjected to antirust liquid impregnation treatment.

In addition, the plate-shaped support element can be disposed with its position relative to the panel being regulated by the engaging strips that engage the plate-shaped support element and the panel respectively, whereby the resin-molded element in its pre-foaming state and the inner face of the vehicle body panel can be more stably held apart from each other by a gap. In this case, it is preferable that a fixed portion of the plate-shaped support element, which is in engagement with a corresponding one of the engaging strips, be disposed apart from the panel by a gap. This construction makes it possible to subject a portion of the panel facing the gap to antirust liquid impregnation treatment, to fill the gap with the resin-molded element in its post-foaming state, and to thereby enhance the rigidity of the fixed portion of the panel.

The positional regulation of the resin-molded element may be carried out by regulating the position(s) of the plate-shaped support element and/or the resin-molded element by means of a fastening structure portion provided on the panel, or by fixing the plate-shaped support element and/or the resin-molded element to the panel by means of welding, bonding or fusing. Moreover, the relative positional regulation between the plate-shaped support element and the resin-molded element and the positional regulation between these elements and the vehicle body panel may be carried out simultaneously by means of engaging strips that engage the plate-shaped support element, the resin-molded element, and the vehicle body panel respectively.

Further, in the construction of the invention, the resin-molded element may form at least one intermediate wall that extends between inner faces of the panel in such a manner as to partition the interior of the vehicular structural element or the vehicle body. Formation of the intermediate wall makes it possible to more effectively enhance the rigidity and tenacity of the vehicular structural element or the vehicle body especially in the case where they are flat in shape.

In the case where the intermediate wall is provided, the plate-shaped support element may be provided around a portion of the resin-molded element which constitutes the intermediate wall, in such a manner as to clamp the intermediate wall. In the case where the intermediate wall extends from a portion of the inner face of the panel which is placed along the resin-molded element to a portion of the inner face of the panel which is not provided with the resin-molded element, the plate-shaped support element may extend at an end of the portion which is not provided with the resin-molded element, in such a manner as to envelop the end. It is preferable that the portion extending in such a manner as to envelop the resin-molded element be disposed apart from the inner face of the panel by a gap. According to this construction, the portion of the inner face of the panel, with which the end of the intermediate wall finally comes into close contact, can be subjected to antirust liquid impregnation treatment. Also, the resin-molded element can be brought into close contact with the inner face of the panel by filling the gap with the resin-molded element in its post-foaming state, whereby the strength of those close-contact portions can be enhanced.

It is advantageous to use, as the resin-molded element, a material that foams and expands at a temperature of 150°C to 205°C as a temperature for antirust liquid immersion treatment for generally available vehicle panels. In this case, since the resin-molded element foams through heat during antirust liquid impregnation treatment, there is no need to carry out a treatment of heating the resin-molded element as a separate step to promote the foaming thereof. Therefore, the efficiency in manufacturing the vehicle body can be enhanced.

As described above, it is preferable that the resin-molded element exhibit a compressive strength of 10MPa or more and a shearing strength of 1MPa or more after having finished foaming. Further, it is preferable that the adhesive force under shear between the resin-molded element and the panel be equal to or larger than 4MPa. By satisfying these conditions, it becomes possible to provide the vehicular structural element or the vehicle body with excellent rigidity and excellent tenacity, and to sufficiently enhance the degree of safety in case of an automobile collision.

It is preferable that a metal plate having a thickness of preferably less than 0.3mm and an elongation rate of 5% to 10% be used as the plate-shaped support element. In the case where such a plate-shaped support element having a small thickness and a high elongation rate is used, even if the vehicular structural element or the vehicle body is greatly deformed, the plate-shaped support element is not destroyed but deformed in accordance with deformation of the vehicular structural element or the vehicle body. Accordingly, the plate-shaped support element makes it possible to hold the resin-molded element in close contact with the inner face of the panel over a long period in the course of deformation, and to keep the rigidity of the vehicular structural element or the vehicle body high.

Instead of using the metal plate, the plate-shaped support element may be made of heat-resistant resin and formed as a thin material that more greatly flexes than the resin-molded element without being destroyed. In the case of this construction as well, the plate-shaped support element serves to hold the resin-molded element in close contact with the inner face of the panel over a long period in the course of deformation of the vehicular structural element or the vehicle body. In particular, nylon 66 can be used as the resin constituting the plate-shaped support element mentioned above.

It is preferable that the plate-shaped support element not be destroyed but be deformed in accordance with deformation of the vehicular structural element or the vehicle body until a sufficiently long period elapses after formation of a crack in the resin-molded element in the course of deformation of the vehicular structural element or the vehicle body, especially until the bending displacement of the vehicular structural element or the vehicle body becomes equal to or larger than 10mm, more specifically, equal to or larger than 20mm. In the body reinforcing material arrangement structure of the invention, it is preferable that the bending load applied to the vehicular structural element or the vehicle body be thereby held equal to or larger than 10kN for a sufficiently long period after formation of a crack in the resin-molded element in the course of deformation of the vehicular structural element or the vehicle body.

### BREF DESCRIPTION OF THE DRAWINGS

Figs. 1a and 1b are cross-sectional views of a prismatic portion of a vehicle body having a body reinforcing material arrangement structure in accordance with a first embodiment of the invention. Fig. 1a shows a resin-molded element in its pre-foaming state, whereas Fig. 1b shows the resin-molded element in its post-foaming state.

Fig. 2 is a perspective view of the prismatic portion shown in Fig. 1b.

Fig. 3 is a perspective view of a portion of the prismatic portion, shown in Fig. 1a, to which a plate-shaped support element is fixed.

Fig. 4 is a cross-sectional view showing another constructional example in which the resinmolded element and the plate-shaped support element are fixed differently from Fig. 1a.

Fig. 5 is a cross-sectional view showing still another constructional example of Fig. 1a.

Figs. 6a and 6b are schematic views showing one constructional example of a fastening structure portion which fixes the resin-molded element and the plate-shaped support element and which is provided on the side of a vehicle body component member. Fig. 6a is a perspective view, whereas Fig. 6b is a cross-sectional view of a pin-shaped portion shown in Fig. 6a.

Figs. 7a and 7b are schematic views showing another constructional example of the fastening structure portion which is provided on the side of the vehicle body component member. Fig. 7a is a perspective view, whereas Fig. 7b is a cross-sectional view of a brim-shaped portion shown in Fig. 7a.

Fig. 8 is a cross-sectional view showing still another constructional example of Fig. 1a.

Fig. 9 is a cross-sectional view showing still another constructional example of Fig. 1a.

Figs. 10a and 10b are cross-sectional views of a prismatic portion of a vehicle body having a body reinforcing material arrangement structure in accordance with a second embodiment of the invention. Fig. 10a shows a resin-molded element in its pre-foaming state, whereas Fig. 10b shows the resin-molded element in its post-foaming state.

Figs. 11a, 11b and 11c show an intermediate wall portion of the prismatic portion shown in Fig. 10. Fig. 11a is an exploded perspective view of a resin-molded element in its pre-foaming state. Fig. 11b is a cross-sectional view. Fig. 11c is a cross-sectional view of the resin-molded element in its post-foaming state.

Fig. 12 is a cross-sectional view of a prismatic portion in accordance with a modification example of Fig. 10a.

Fig. 13 is a cross-sectional view of a columnar portion in accordance with another modification example of Fig. 10a.

Fig. 14 is a cross-sectional view of a prismatic portion in accordance with still another modification example of Fig. 10a.

Fig. 15 is a perspective view showing how a bending test is conducted on the prismatic portion in examples of the invention.

Figs. 16a and 16b are graphs showing how bending load changes with respect to displacement when the bending test is conducted in the examples of the invention.

Figs. 17a to 17d are schematic views showing how the prismatic portion is destroyed during the bending test.

### BEST MODES OF IMPLEMENTING THE INVENTION

Hereinafter, embodiments of the invention will be described with reference to the drawings.

### (First Embodiment)

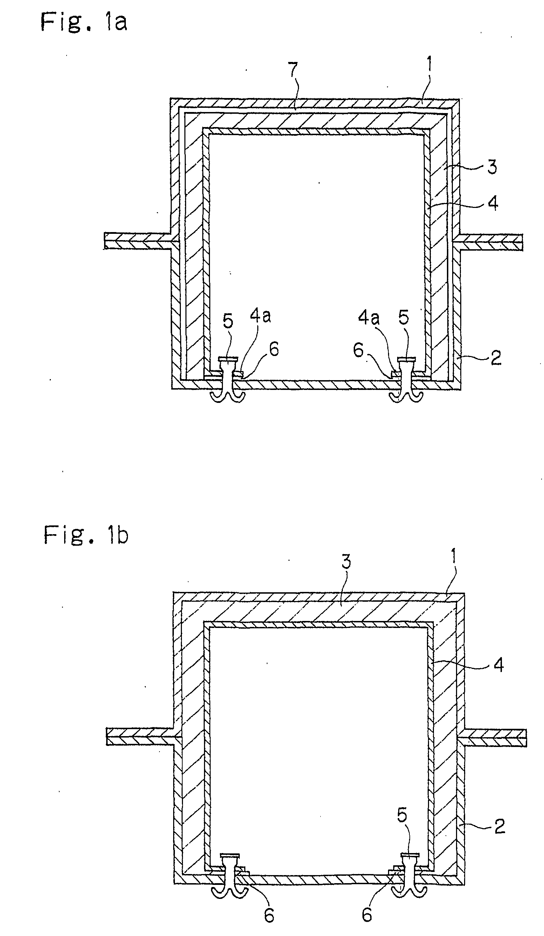

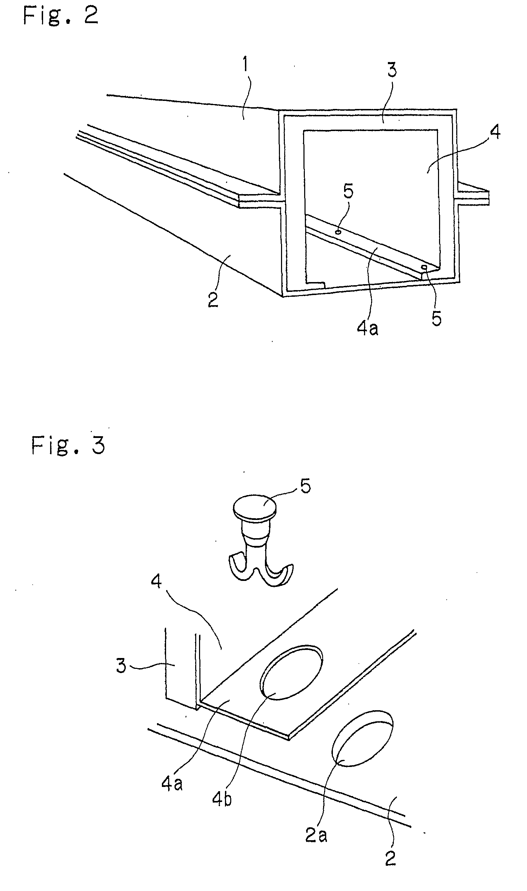

Figs. 1a, 1b and 2 show a body reinforcing material arrangement structure in accordance with a first embodiment of the invention. This body reinforcing material arrangement structure is constructed by disposing a resin-molded element 3 as a reinforcement and a plate-shaped support element 4 supporting it in a prismatic portion which is formed of an outer panel 1 and an inner panel 2 and which has a generally square cross-section.

The plate-shaped support element 4 has three wall portions facing inner faces of a wall located outside a vehicle and both lateral walls adjacent thereto. The wall located outside the vehicle is constituted by the outer panel 1. The three wall portions are spaced apart from the walls respectively by a certain distance. The resin-molded element 3 is in contact with outer faces of the three wall portions of the plate-shaped support element 4, and is disposed between the three wall portions and the outer and lateral walls that are formed of the outer panel 1 and the inner panel 2.

In this construction, the outer panel 1 and the inner panel 2 are vehicle body panels constituting the vehicle body. For these panels, a steel plate having a thickness of 0.7mm to 1.2mm is generally used. The body reinforcing material arrangement structure of the first embodiment is a structure in a hollow prismatic portion whose outer walls are constituted by those panels. The prismatic portion as mentioned herein is formed, for example, as a pillar portion having crosssectional inner dimensions ranging approximately from 50mm x 50mm to 50mm x 120mm.

The resin-molded element 3 is constructed by injection-molding a resin exhibiting hot-state foamability. As the resin-molded element 3, it is appropriate to use a material which can be shaped with a high degree of freedom and whose physical values concerning the hardness in its post-foaming state are equal to or larger than a certain value. Namely, it is appropriate to use a material having a compressive strength of 10MPa or more and a shearing strength of 1MPa or more. As the resin-molded element 3, it is appropriate to use a material which starts foaming at a generally acknowledged temperature for antirust liquid immersion treatment for vehicle body panels, that is, at a temperature of 150°C to 250°C, and whose coefficient of cubical expansion resulting from foaming approximately ranges from 150% to 250%.

A resin-molded element exhibiting the aforementioned characteristics by and large is obtained by injection-molding a resin disclosed in Patent Specification No. WO00/27920. This material was caused to foam, and was brought into close contact with a vehicle panel subjected to antirust liquid immersion treatment. An adhesive force under shear between the material and the vehicle panel was then measured under the condition that the adhesion area be 625mm² and that the thickness of the resin-molded element 3 be 5mm. As a result, it was confirmed that the adhesive force under shear was held equal to or larger than 8MPa (this result of measurement was obtained after carrying out baking for 20 to 30 minutes at a heating temperature of 160°C to 170°C in a baking process after painting the vehicle body). It is preferable to hold the adhesive force under shear as large as possible, because the resin-molded element in its post-foaming state is kept in close contact with the vehicle body panel for a long time in the course of deformation of the vehicle body.

In the case where the adhesive force under shear is large, the material in the resin-molded element may fracture (i.e., so-called material fracture) before adhesive faces are detached from each other in a shear test. This means that a fairly large adhesive force under shear is guaranteed, and can be regarded as a desirable result.

As the plate-shaped support element 4, it is appropriate to use a thin and light material which exhibits a high elongation rate, which is deformed in accordance with a great deformation stroke, and which does not fracture with ease. To provide the plate-shaped support element 4 with these characteristics, the use of a metal plate, especially an aluminum plate is recommended. It is appropriate that the plate-shaped support element 4 have a thickness of preferably less than 0.3mm and exhibit an elongation rate of 5 % to 10 % or more. Instead of the aluminum plate, it is also possible to use a galvanized steel plate, an oil-coated steel plate, or the like. Instead of being formed as a metal plate, the plate-shaped support element 4 may also be a thin material which is made of a heat-resistant resin such as nylon 66 and which more greatly flexes than the resinmolded element 4 without being destroyed.

Next, disposition of these reinforcements will be described.

As described above, the resin-molded element 3 and the plate-shaped support element 4 are coupled to each other in advance with their opposed faces being held in contact with each other respectively. This can be realized by integrally forming the resin-molded element 3 on the plateshaped support element 4, for example, by means of insert molding. The resin-molded element 3 may also be formed separately from the plate-shaped support element 4 and be coupled thereto by being glued thereon or being engaged therewith.

Then, the resin-molded element 3 and the plate-shaped support element 4 thus coupled to each other are disposed in the prismatic portion. If the plate-shaped support element 4 is disposed in the prismatic portion, each end portion of the plate-shaped support element 4 which faces a wall located inside the vehicle and constituted by the inner panel 2 is bent toward the center of the prismatic portion along the wall, whereby each fixed portion 4a is formed. The fixed portion 4a is formed by being bent away from an inner wall of the prismatic portion, at a position offset from an end of the resin-molded element 3 by several millimeters. Thus, the resin-molded element 3 protrudes further toward the inner wall of the prismatic position than the fixed portion 4.

As shown in Fig. 3, an elliptical opening 4b is formed in the fixed portion 4a. Also, an elliptical opening 2a is formed in the inner panel at a position corresponding to the opening 4b. A clip (engaging strip) 5 is passed through the openings 4b and 2a. A cylindrical portion having a diameter larger than a minor axis of the openings 4b and 2a is formed at one end of the clip 5. The other end of the clip 5 is bifurcated into two leg portions, which extend in opposed directions and then are curved upwards. These leg portions are elastically deformable.

The clip 5 is passed through the openings 4b and 2a with the leg portions extending in the same direction as a major axis of the openings 4b and 2a. The clip 5 is then rotated by 90°, whereby leading ends of the leg portions come into abutment on edges of the minor axis of the opening 2a. If this state is established, owing to elastic forces of the leg portions of the clip 5, a force is applied to the plate-shaped support element 4 in such a direction as to press the fixed portion 4a toward the inner wall of the prismatic portion. The resin-molded element 3 and the plate-shaped support element 4 are thereby fixed with each end of the resin-molded element 3 being pressed against the inner panel 2.

In this state, as described Above, the end of the resin-molded element 3 protrudes further than the fixed portion 4a. Therefore, as shown in Fig. 1a, there is a small gap 6 of more or less several millimeters formed between the fixed portion 4a and the inner panel 2. With the resin-molded element 3 and the plate-shaped support element 4 being thus fixed to each other, there is a small gap 7 of more or less several millimeters formed between the resin-molded element 3 and the outer and both lateral walls of the prismatic portion. The gap 7 can be secured by adjusting the thickness of the resin-molded element 3 in its pre-foaming state and the position for fixing the plate-shaped support element 4.

The vehicle body panels to which the resin-molded element 3 and the plate-shaped support element 4 as the reinforcements are thus fixed, namely, the outer panel 1 and the inner panel 2 are thereafter subjected to antirust liquid immersion treatment. In this step, since the gap 7 is secured in the prismatic portion between the resin-molded element and the inner faces of the outer panel 1 and the inner panel 2, the antirust liquid comes into contact with the inner faces as well, which are then immersed therein. The antirust liquid also penetrates the gap 6 between the fixed portion 4a of the plate-shaped support element 4 and the inner face of the inner panel 2, so that a corresponding portion of the inner face is immersed in the antirust liquid.

In this state, the resin-molded element 3 foams and expands by being heated to a temperature for antirust liquid immersion treatment. In consequence, as shown in Figs. 1b and 2, the space between the walls of the prismatic portion and the plate-shaped support element 4 is completely filled with the resin-molded element 3 that has thus expanded. The same holds true for the gap 6 between the fixed portion 4a of the plate-shaped support element 4 and the inner panel 2. That is, as shown in Fig. 1b, the gap 6 is filled with the resin-molded element 3 in its post-foaming state. The resin-molded element 3 that has thus expanded to the extent of coming into contact with the inner face of the outer wall of the prismatic portion is closely fitted and bonded thereto.

As described hitherto, according to the construction of the first embodiment, the resin-molded element 3 exhibiting a sufficiently high compressive strength and a sufficiently high shearing strength is disposed in the prismatic portion constituted by the outer panel 1 and the inner panel 2, whereby the rigidity and tenacity of the prismatic portion can be enhanced effectively. Further, the resin-molded element 3 is disposed in the region extending along the outer wall of the prismatic portion, whereby the rigidity and tenacity of the prismatic portion can be enhanced effectively using a relatively small amount of the resin-molded element 3. The resin-molded element 3 is in contact with the inner faces of the outer and both lateral walls, to which a compressive force is highly likely to be applied, especially in case of an automobile collision. Thus, the prismatic portion is effectively suppressed from being deformed in case of an accident.

In addition, according to the first embodiment, the plate-shaped support element 3, which exhibits a high elongation rate and which greatly flexes without being destroyed, holds the resinmolded element 3 in the region that is in contact with the inner face of the outer wall of the prismatic portion. According to this construction, even if the prismatic portion has been greatly deformed, the plate-shaped support element 4 is deformed in accordance with the deformation of the prismatic portion. Therefore, the resin-molded element 3 can be held in the region that is in contact with the inner face of the outer wall of the prismatic portion. Thus, even if the resinmolded element 3, which is relatively hard because of the physical characteristic values as mentioned above, has been greatly deformed and developed a crack or the like, it is possible to keep the resin-molded element 3 bonded to the inner face of the outer wall of the prismatic portion. Hence, the effect of enhancing the rigidity of the prismatic portion by means of the resin-molded element 3 can be maintained over a relatively lang period in the course of deformation of the prismatic portion.

In the construction of the first embodiment, before the resin-molded element 3 foams, the inner face of the outer wall of the prismatic portion, to which the resin-molded element 3 in its postfoaming state is to be bonded finally, is immersed in antirust liquid. Hence, formation of rust in this area is prevented over a long period, and the adhesive force of the resin-molded element 3 can be maintained. Accordingly, the effect of enhancing the rigidity and tenacity of the prismatic portion can be maintained by the resin-molded element 3.

Although the first embodiment illustrates an example in which the invention is applied to the prismatic portion having a generally square cross-section, the invention is also effectively applicable to a columnar portion having another cross-sectional shape such as a rectangular or pentagonal shape. The construction of the first embodiment is also effective for a columnar portion whose cross-section has somewhat rounded corners. The reinforcement disposition structure of the first embodiment can be provided not only in the prismatic portion but also in various structural elements of the vehicle or at various locations inside the vehicle body.

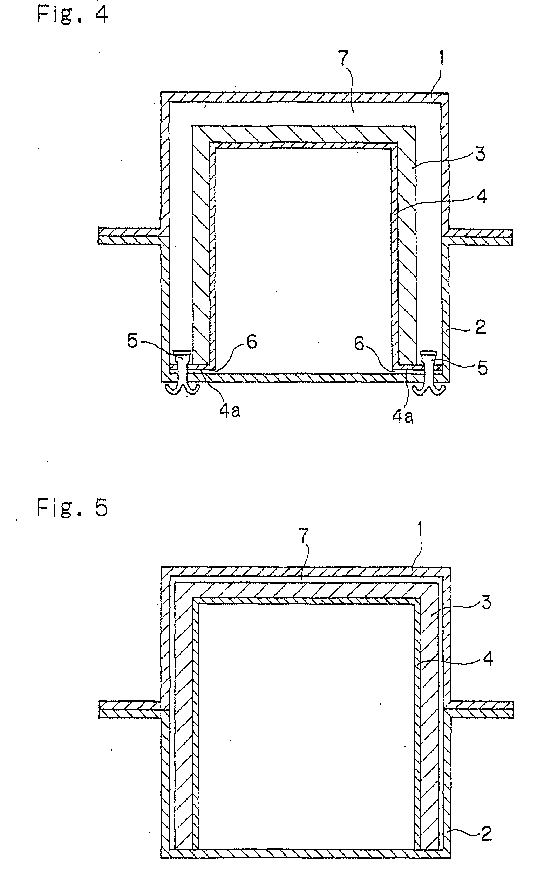

The method of fixing the resin-molded element 3 and the plate-shaped support element 4 is not limited to the aforementioned method. In other words, various methods are contemplable. Figs. 4 to 9 are schematic views of other constructional examples in which the resin-molded element 3 and the plate-shaped support element 4 are fixed by other methods of fixation.

Fig. 4 shows a constructional example wherein the fixed portion 4a is formed by bending each end of the plate-shaped support element 4 toward the lateral wall and wherein the clip 5 is engaged with the fixed portion 4a. In this construction, the fixed portion 4a is discontinuously formed in the longitudinal direction of the columnar portion, and the resin-molded element 3 that has foamed can pass through a hiatus of the fixed portion 4a and fill the gap 6. It is also appropriate to adopt a construction wherein a convex portion extending through the hiatus of the fixed portion 4a is formed at the end of the resin-molded element 3 in its pre-foaming state while being in contact with the inner panel 2.

Fig. 5 shows a construction wherein a U-shaped assembly composed of the resin-molded element 3 and the plate-shaped support element 4 that are fixed to each other by insert molding or the like is fixed without using a clip. In this construction, each end of the plate-shaped support element 4 may be at least partially spaced apart from the inner panel 2 by a gap, which is to be filled with the resin-molded element 3 that has foamed. As a method of fixing the U-shaped assembly, it is contemplable to fix the resin-molded element 3, the plate-shaped support element 4, or both of them to the inner panel 2 by welding, bonding, or fusing.

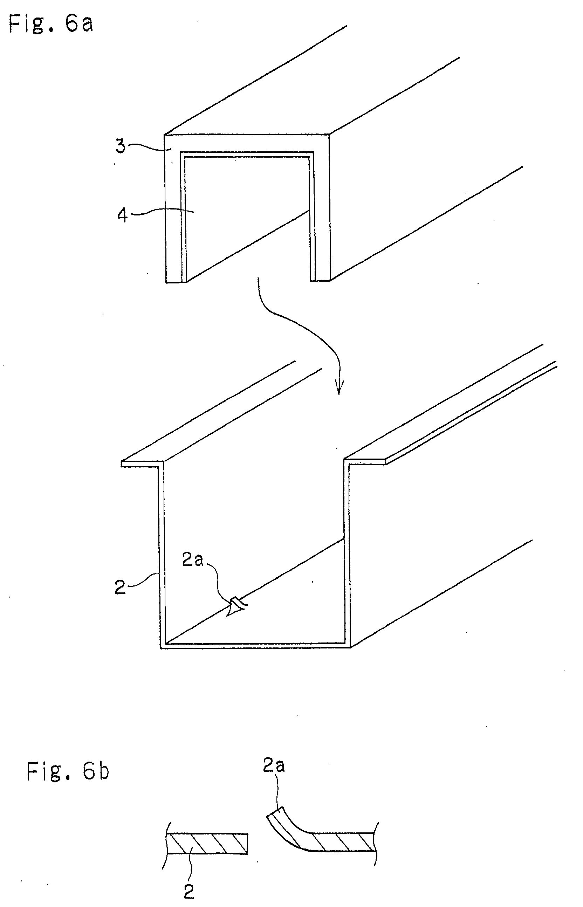

Further, as a fixing method that does not use a clip, it is contemplable to provide a fastening structure portion on the side of a member constituting the vehicle body, such as the outer panel 1, the inner panel 2, or the like. Figs. 6a and 6b show a constructional example of such a fastening structure portion. In this example, an upwardly acuminating pin-shaped portion 2a is formed in the inner panel 2 at a position which is to come into contact with each end of the resin-molded element 3. The resin-molded element 3 can be fixed by thrusting the end thereof onto the pinshaped portion 2a.

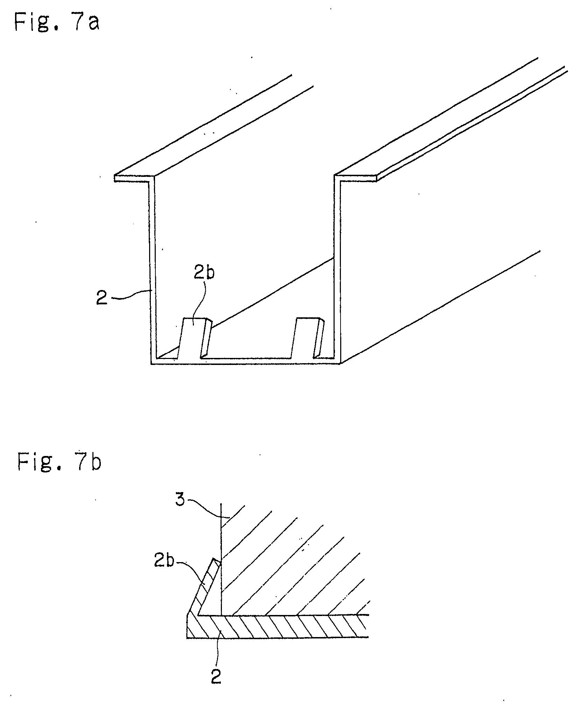

Figs. 7a and 7b show another constructional example of the fastening structure portion. In this construction, brim-shaped portions 2b that are so formed as to rise diagonally inwards are provided at both longitudinal ends of the columnar portion of the inner panel 2. The assembly of the resinmolded element 3 and the plate-shaped support element 4 is disposed by being sandwiched between the brim-shaped portions 2b in their elastically deformed states. Thus, the assembly is fixed by being pressed by restoring forces of the brim-shaped portions 2b.

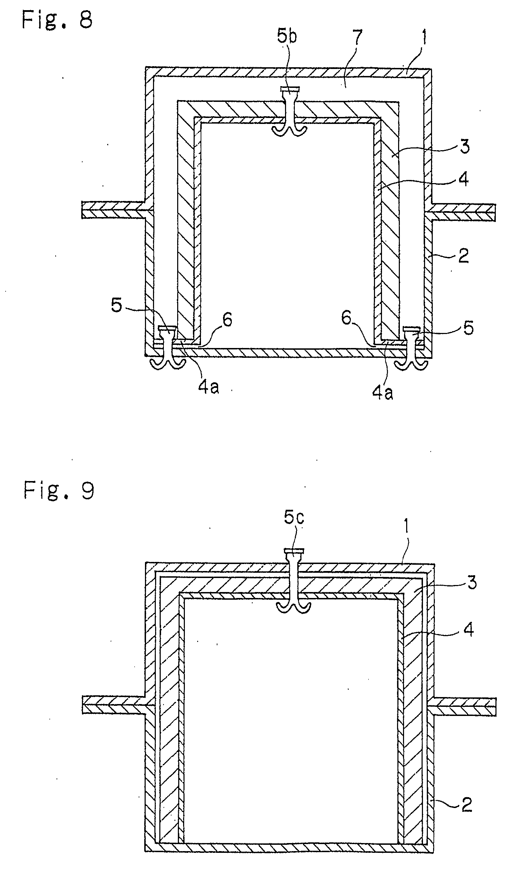

Fig. 8 shows a constructional example in which the resin-molded element 3 and the plateshaped support element 4 are formed as separate pieces and fixed to each other by means of a clip 5b penetrating both elements. Fig. 9 shows a constructional example in which the resin-molded element 3 and the plate-shaped support element 4 are fixed to each other by means of a clip 5c, which penetrates the resin-molded element 3, the plate-shaped support element 4, and the outer panel 1.

The method of fixing the resin-molded element 3 and the plate-shaped support element 4 to each other is not limited to the above-mentioned examples. That is, they may be fixed to each other according to any other known method.

### (Second Embodiment)

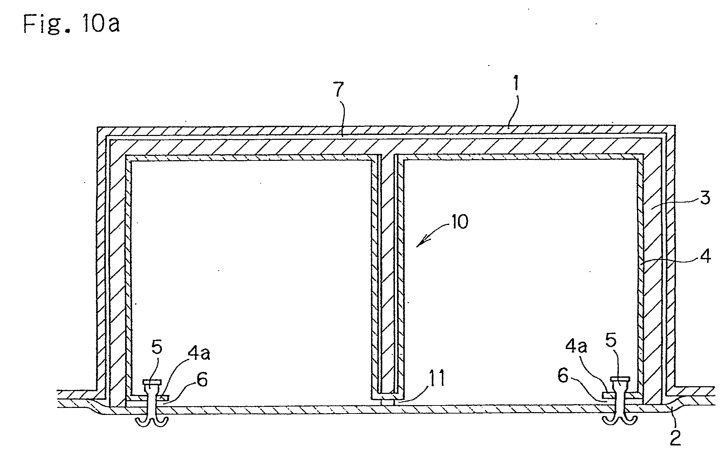

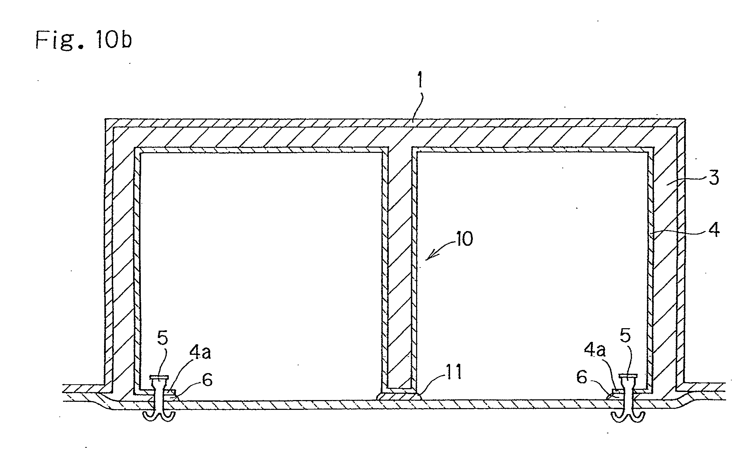

Figs. 10a and 10b show a body reinforcing material arrangement structure in accordance with a second embodiment of the invention. The body reinforcing material arrangement structure of the second embodiment is constructed by disposing the resin-molded element 3 and the plate-shaped support element 4 in a prismatic portion having an oblong cross-section. The resin-molded element 3 is disposed not only in a region extending along an inner face of an outer wall of the prismatic portion but also in a region extending in the direction of a short side of the prismatic portion at the center of a long side thereof. A portion of the resin-molded element 3 which is disposed at the center of the long side and the plate-shaped support element 4 so disposed as to surround the portion form an intermediate wall 10.

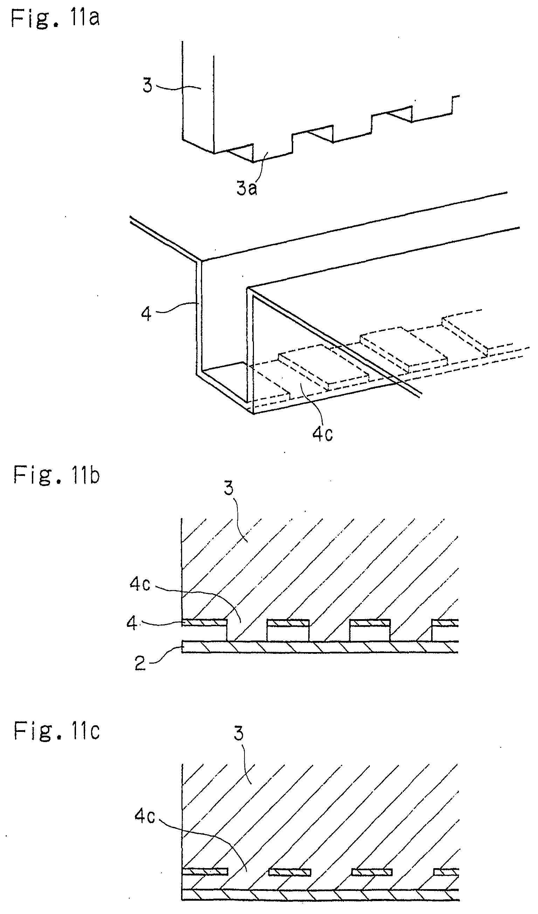

A portion of the plate-shaped support element 4 which constitutes the intermediate wall 10 has an end that is close to an inner wall of the vehicle which is constituted by the inner panel 2. This end is spaced apart from an inner face of the inner wall of the prismatic portion by a gap 11 of more or less several millimeters. As shown in Figs. 11a, 11b and 11c, a plurality of openings 4c are formed at the end of the plate-shaped support element 4. As shown in Figs. 11a and 11b, a plurality of convex portions 3a, which extend through the openings 4c and which are in contact with the inner face of the inner panel 2, are formed at an end of a portion of the resin-molded element 3 in its pre-foaming state which constitutes the intermediate wall 10.

If antirust liquid immersion treatment is carried out with the resin-molded element 3 being thus disposed, the resin-molded element 3 that has foamed and expanded is so supplied as to fill the gap 11 at an end of the intermediate wall 10, as shown in Figs. 10b and 11c. In this state, since the gap 11 is provided, the region to which the end of the portion of the resin-molded element 3 which constitutes the intermediate wall 10 is bonded is also thus immersed in antirust liquid. Thus, formation of rust in that portion can be prevented.

In the construction of the second embodiment wherein the intermediate wall 10 is provided, when the vehicle body is deformed, part of a load applied thereto can be supported by the intermediate wall 10. Thus, the rigidity and tenacity of the prismatic portion can further be enhanced. Also, the plate-shaped support element 4 and the resin-molded element 3 can be prevented from bending at a center portion in the direction of the long side of the prismatic portion and separating from the outer panel 1. An effect of reinforcement obtained by the resin-molded element 3 can thereby be maintained over a long period in the course of deformation.

The construction of the second embodiment is particularly effective for a prismatic portion having an elongate cross-section, especially for a prismatic portion having a cross-section having a short side and a long side that is about twice or more as long as the short side. That is, if the prismatic portion has an elongate cross-section as in this case, the region around the center of a long side of the cross-section tends to be fragile. However, the installation of the intermediate wall 10 makes it possible to effectively enhance the strength of the region that tends to be fragile.

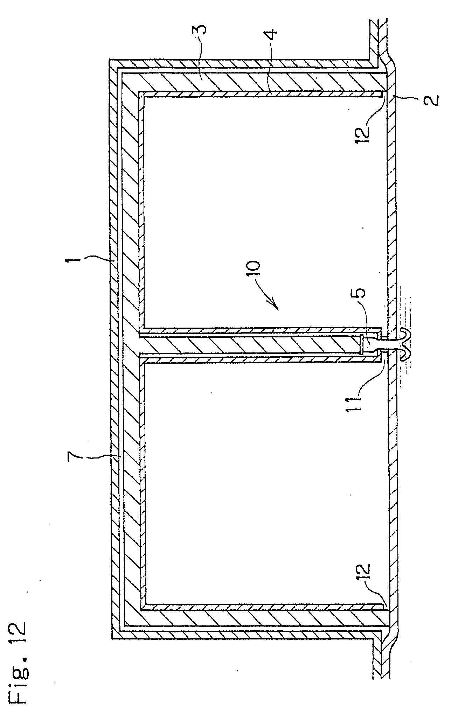

In the construction shown in Figs. 10a and 10b, as in the case of the first embodiment, the plateshaped support element 4 is fixed at each end of the portion extending along the lateral wall of the prismatic portion. As shown in Fig. 12, however, it is also possible to adopt a construction wherein the plate-shaped support element 4 is fixed at the end of the intermediate wall 10. In this construction, the number of openings to be formed in the inner panel 2 for clips 5 can be made relatively small. Accordingly, this construction is effective in the case where a large number of openings cannot be formed because of the shape of the inner panel 2.

In the construction shown in Fig. 12, the end of the plate-shaped support element 4 is not fixed. Even if the end of the plate-shaped support element 4 is made free as in this case, the resin-molded element 3 is bonded to the inner face of the prismatic portion after having foamed and expanded. Therefore, this region can be ensured of a sufficiently high strength.

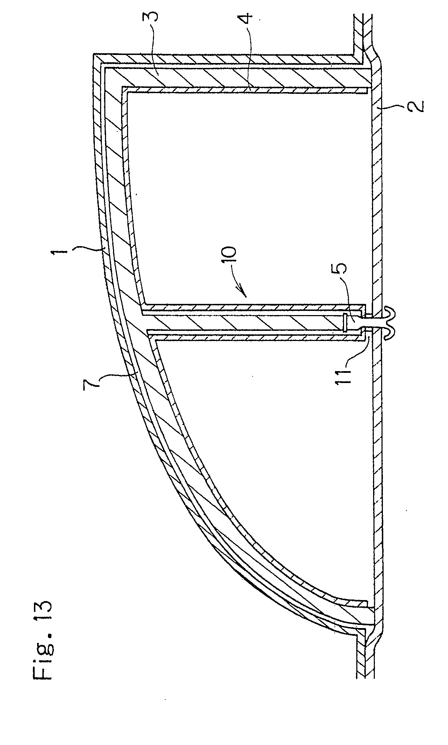

The construction of the second embodiment is also effectively applicable to a columnar portion having a partially rounded cross-section as shown in Fig. 13. In this case as well, the rigidity and tenacity of the columnar portion can be enhanced effectively by disposing the resin-molded element 3 and the plate-shaped support element 4.

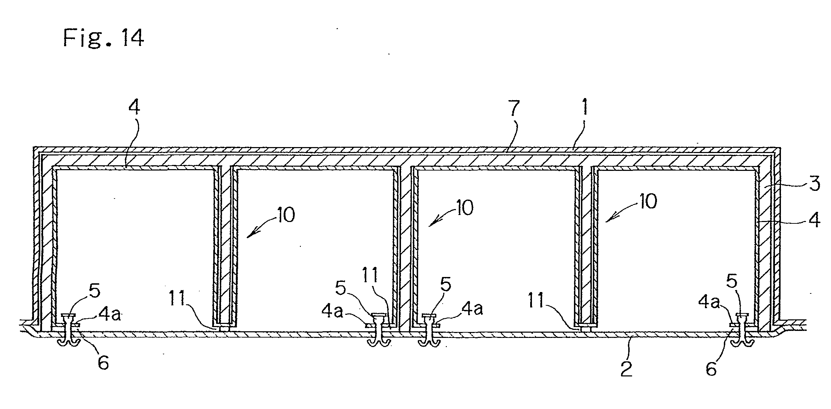

In the case where the reinforcements are disposed in a prismatic portion having a higher degree of flatness, especially in a prismatic portion having a cross-section having a short side and a long side that is three or more times as long as the short side as shown in Fig. 14, a plurality of intermediate walls 10 may be provided. Thus, the strength of the prismatic portion can be effectively enhanced as a whole. In this construction, as exemplified in Fig. 14, it is also appropriate that the fixed portion 4a as described in the first embodiment be formed at the end of the plate-shaped support element 4 located around each of some of the intermediate walls 10, and be fixed by means of the clip 5.

### (Examples)

Body reinforcing material arrangement structures of examples were constructed according to the respective embodiments, and body reinforcing material arrangement structures of comparative examples to be compared with the examples were constructed. A bending test was then carried out as to these structures. Results obtained from this test will be described hereinafter.

### (Example 1)

In this example, a prismatic vehicle body model having a body reinforcing material arrangement structure as shown in Figs 1a and 1b was prepared in accordance with the first embodiment.

This prismatic vehicle body model was constructed as a sufficiently long square pole portion having a cross-sectional shape of 50mm x 50mm by using two steel plates with a thickness of 0.7mm as vehicle body panels and combining them with each other. An aluminum plate having a thickness of 0.15mm and an elongation rate of 10% was disposed as the plate-shaped support element 4 along inner faces of three of outer walls constituting the prismatic vehicle body model.

Sika Reinforcer (commercial name) manufactured by Sika Ltd. was disposed as the resinmolded element 3 between the plate-shaped support element 4 and the vehicle body panels. The thickness of the resin-molded element 3 was set as 4mm. This resin-molded element foams at a temperature of 150°C, and exhibits a compressive strength of 22MPa (measured using a cylindrical test piece with a diameter of 50mm and a height of 100mm) and a shearing strength of 4MPa (measured using a test piece with an adhesion area of 625mm² and a thickness of 3mm) after foaming.

The prismatic vehicle body model constructed by thus disposing the plate-shaped support element 4 and the resin-molded element 3 was left in an electric furnace at a temperature of 170°C for 20 minutes. Then, the resin-molded element 3 foamed, was hardened, and completely filled the space between the plate-shaped support element 4 and the vehicle body panels: At this moment, the resin-molded element 3 exhibited an apparent foaming multiplication factor of approximately 150%, and the adhesive force under shear between the resin-molded element 3 in its post-foaming state and the vehicle body panels ranged from 7MPa to 9MPa.

### (Comparative Examples 1-1 to 1-3)

Three prismatic vehicle body models of comparative examples 1-1 to 1-3 were prepared to be compared with the example 1. As is the case with the example 1, each of these prismatic vehicle body models was constructed as a sufficiently long square pole portion having a cross-sectional shape of 50mm x 50mm by using two steel plates with a thickness of 0.7mm as vehicle body panels and combining them with each other.

The prismatic vehicle body model of the comparative example 1-1 was constructed with no reinforcement disposed therein. In the comparative example 1-2, a steel plate having a thickness of 0.15mm and exhibiting a lower elongation rate than in the example 1 was used as the plateshaped support element 4. This steel plate exhibits an elongation rate of 4%. In the comparative example 1-3, a material that is lower in compressive strength and shearing strength than in the example 1 in its post-foaming state was used as the resin-molded element 3. This resin-molded element in its post-foaming state exhibits a compressive strength of 8MPa and a shearing strength 0.6MPa.

The constructions of the example 1 and the comparative examples 1-1 to 1-3 are illustrated all together in Table 1.

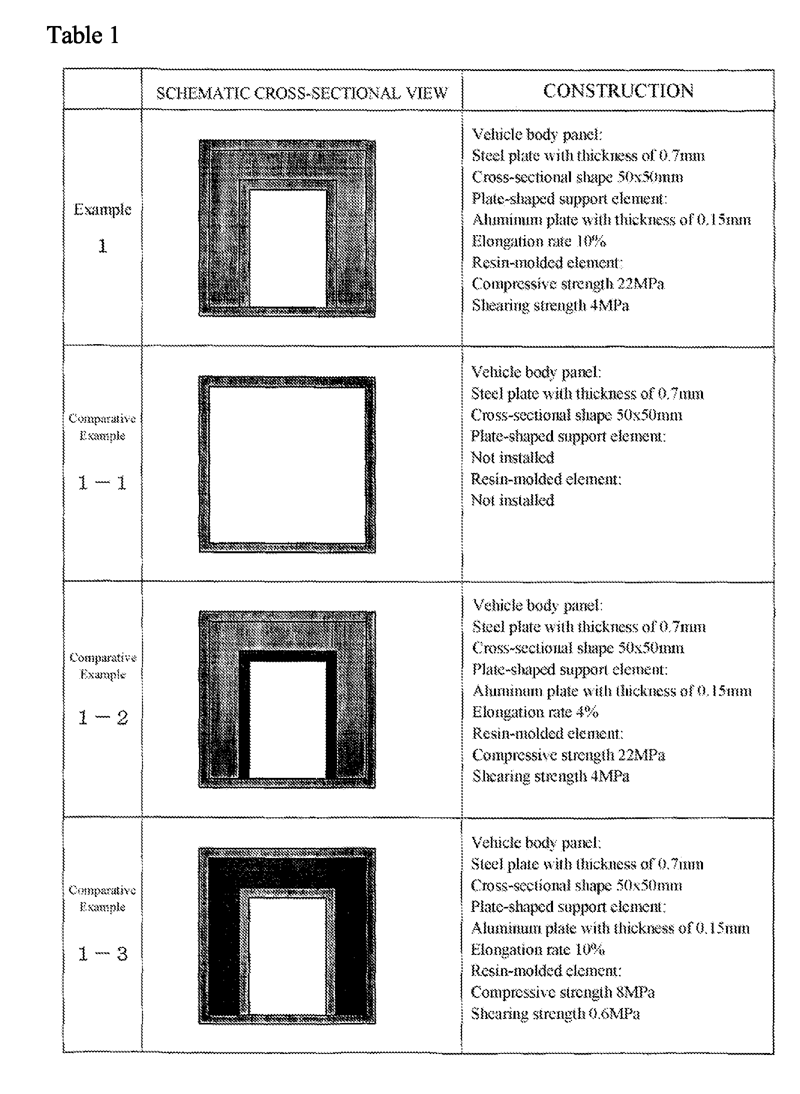

### (Example 2)

In this example, a prismatic vehicle body model having a body reinforcing material arrangement structure as shown in Figs. 10a and 10b was prepared in accordance with the second embodiment.

This prismatic vehicle body model was constructed as a sufficiently long square pole portion having a cross-sectional shape of 50mm x 120mm by using two steel plates with a thickness of 0.7mm as vehicle body panels and combining them with each other. An aluminum plate having a thickness of 0.15mm and an elongation rate of 10% was disposed as the plate-shaped support element 4 along inner faces of three of outer walls constituting the prismatic vehicle body model.

Sika Reinforcer (commercial name) manufactured by Sika Ltd. was disposed as the resinmolded element 3 between the plate-shaped support element 4 and the vehicle body panels. The thickness of the resin-molded element 3 was set as 4mm. This resin-molded element foams at a temperature of 150°C, and exhibits a compressive strength of 22MPa (measured using a cylindrical test piece with a diameter of 50mm and a height of 100mm) and a shearing strength of 4MPa (measured using a test piece with an adhesion area of 625mm² and a thickness of 3mm) after foaming.

The prismatic vehicle body model constructed by thus disposing the plate-shaped support element 4 and the resin-molded element 3 was left in an electric furnace at a temperature of 170°C for 20 minutes. Then, the resin-molded element 3 foamed, was hardened, and completely filled the space between the plate-shaped support element 4 and the vehicle body panels. At this moment, the resin-molded element 3 exhibited an apparent foaming multiplication factor of approximately 150%, and the adhesive force under shear between the resin-molded element 3 in its post-foaming state and the vehicle body panels ranged from 8MPa to 9MPa.

### (Comparative Examples 2-1 to 2-3)

Three prismatic vehicle body models of comparative examples 2-1 to 2-3 were prepared to be compared with the example 2. As is the case with the example 2, each of these prismatic vehicle body models was constructed as a sufficiently long square pole portion having a cross-sectional shape of 50mm x 120mm by using two steel plates with a thickness of 0.7mm as vehicle body panels and combining them with each other.

A construction having no intermediate plate was adopted in the comparative example 2-1. In the comparative example 2-2, a steel plate having a thickness of 0.15mm and exhibiting a lower elongation rate than in the comparative example 2 was used as the plate-shaped support element 4. This steel plate exhibits an elongation rate of 5%. In the comparative example 2-3, a material that is lower in compressive strength and shearing strength than in the example 2 in its post-foaming state was used as the resin-molded element 3. This resin-molded element in its post-foaming state exhibits a compressive strength of 8MPa and a shearing strength 0.6MPa.

The constructions of the example 2 and the comparative examples 2-1 to 2-3 are illustrated all together in Table 2.

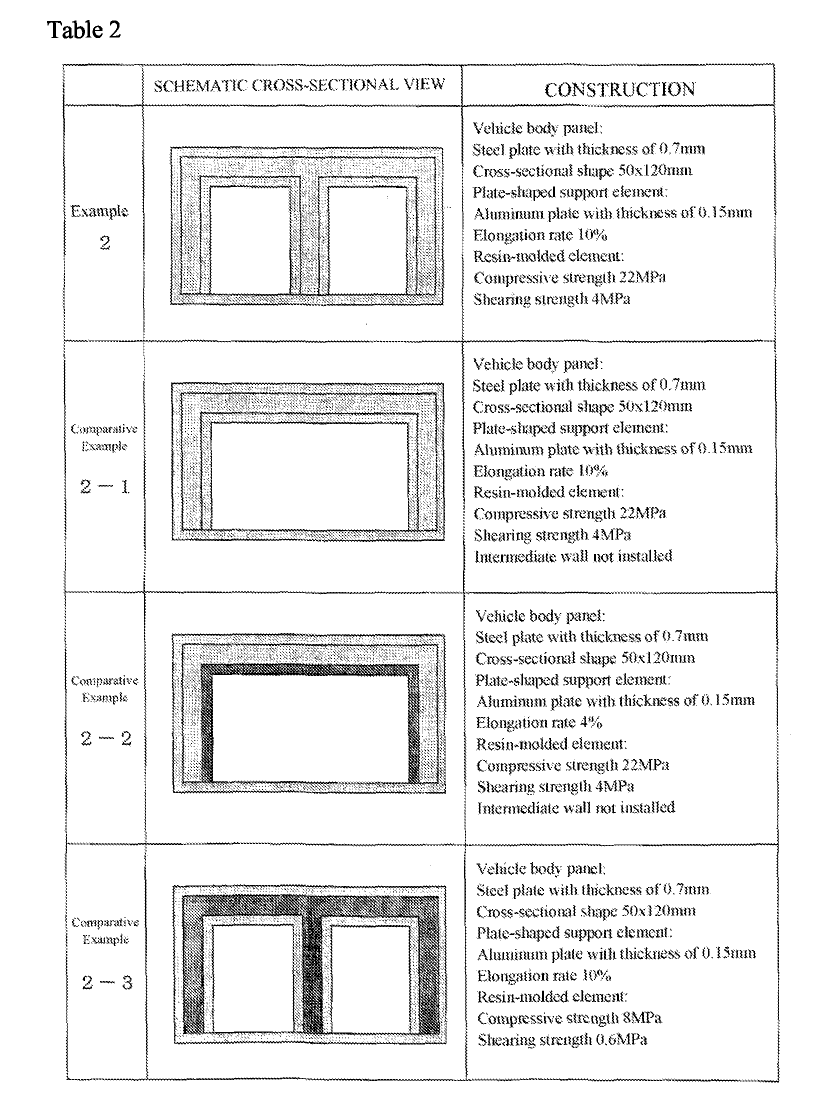

### (Evaluation Based on Bending Test)

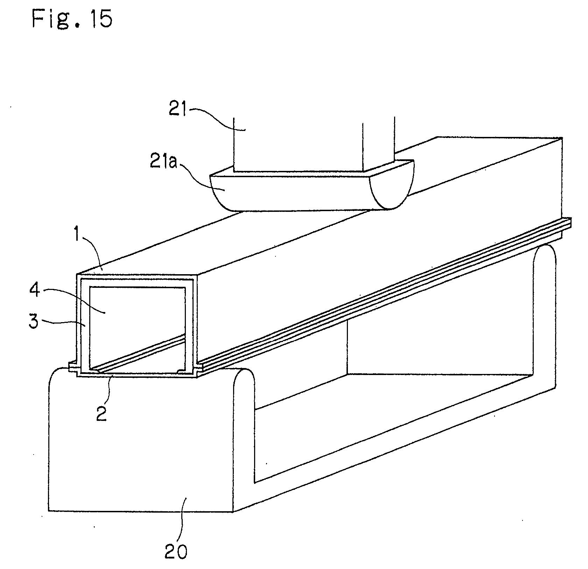

As shown in Fig. 15, each of the prismatic vehicle body models of the examples and the comparative examples was laid on a support block 20 with the outer wall constituted by the outer panel 1 facing upwards, and was supported by both longitudinal end portions of the support block 20. A pressing force was applied from above to the center between supported points of the prismatic vehicle body model using a pressing machine 21 so as to conduct a bending test. As the support block 20, a model having a distance of 500mm between both support portions thereof was used. As the pressing machine 21, a model having a semicylindrical pressing element 21a with a diameter of 120mm was used. The pressing force was applied by displacing the pressing element 21a at a speed of 20mm/s.

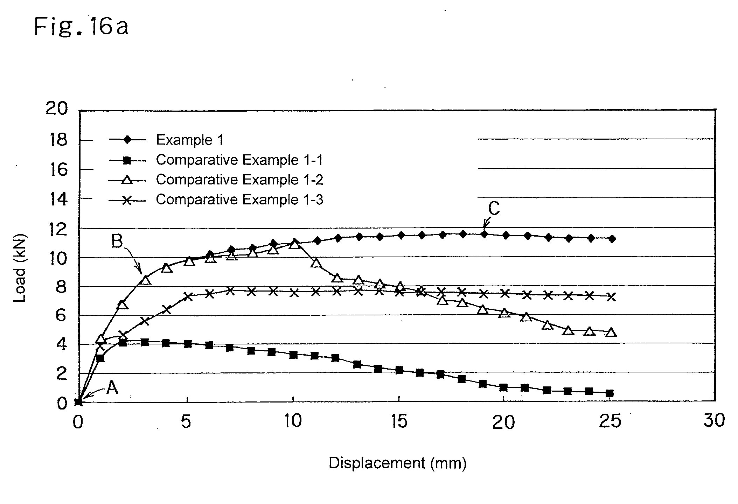

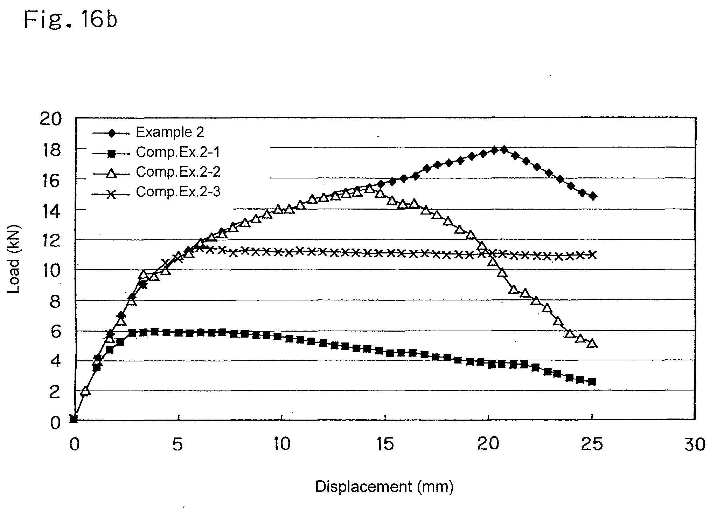

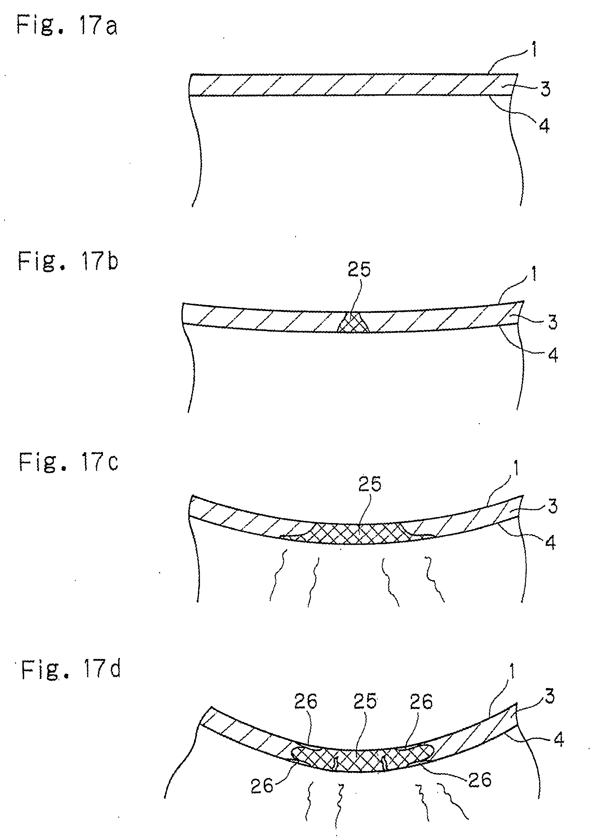

Graphs in Figs. 16a and 16b show changes in the load that is applied to the pressing element 21a when the prismatic vehicle body model is displaced in this bending test, namely, changes in bending load. Figs. 17a to 17d show results obtained by visually observing how the prismatic vehicle body model of the example 1 is destroyed.

Fig. 17a shows the prismatic vehicle body model in its pre-displacement state (corresponding to a timing indicated by "A" in Fig. 16a). If the prismatic vehicle body model in this state is gradually bent, it is substantially elastically deformed before reaching a certain deformation stroke. During this period, the bending load applied to the prismatic vehicle body model increases substantially in proportion to the deformation stroke thereof.

If the prismatic vehicle body model is deformed more or less to its elastic limit (corresponding to a timing indicated by "B" in Fig. 16a), cells (bubbles) formed by the foaming of the resinmolded element 3 start to be crushed in a region 25 around the center of deformation. At this moment, the resin-molded element 3 is held, because of its adhesive force, in close contact with the outer panel 1 and the plate-shaped support element 4. The plate-shaped support element 4 is deformed in accordance with deformation of the outer panel 1, whereby the resin-molded element 3 is pressed onto the outer panel 1. In consequence, the resin-molded element 3 is stably held in close contact with the outer panel 1 and the plate-shaped support element 4. The resin-molded element 3 thus held in close contact with them disperses the stress applied to the outer panel 1, so that the rigidity of the prismatic vehicle body model is enhanced.

If the prismatic vehicle body model is further deformed beyond its elastic limit, the crushing of the cells spreads outwards from the center of deformation as shown in Fig. 17c. It is observed at this moment that wrinkles form in the outer panel 1. Despite this further progress of deformation, the plate-shaped support element 4 is deformed in accordance with deformation of the outer panel 1, and the resin-molded element 3 is pressed onto the outer panel 1. Therefore, the resin-molded element 3 is held in close contact with the outer panel 1 (which corresponds to a period more or less before a timing indicated by "C" in Fig. 16a) over a long period in the process of deformation. The resin-molded element 3 thus held in close contact with the outer panel 1 maintains the rigidity of the prismatic vehicle body model at a relatively high constant value over a long period. Consequently, as shown in Fig. 16a, even if the stroke of displacement is increased, the bending load applied to the prismatic vehicle body model is maintained at a value that is relatively large and substantially constant.

If the prismatic vehicle body model is more greatly deformed (which corresponds to a period after the timing indicated by "C" in Fig. 16a), cracks (crazes) form in the resin-molded element 3 as shown in Fig. 17d, and the plate-shaped support element 4 is partially detached from the outer panel 1 as indicated by reference numerals 26. As a result, the flexural rigidity of the prismatic vehicle body model starts decreasing. However, since the plate-shaped support element 4 continues to hold the resin-molded element 3 in the region adjacent to the outer panel 1, stresses continue to be transmitted to the resin-molded element 3 while being dispersed. Hence, the flexural rigidity of the prismatic vehicle body model decreases only slightly without dropping abruptly.

In this manner, the flexural rigidity of the prismatic vehicle body model of the example 1 is maintained at a relatively high constant value over a long period in the course of deformation. This is apparent from the graph in Fig. 16a wherein the bending load is maintained at a substantially constant value of approximately 10kN over a wide range of bending displacement strokes of 10mm to 25mm.

### (Evaluation Results)

Referring to Fig. 16a, in the construction of the comparative example 1-1 in which no reinforcement is disposed, it is revealed that the flexural rigidity of the prismatic vehicle body model is small in itself, and that the prismatic vehicle body model is deformed by a relatively small load. An abrupt decrease in bending load is observed when the amount of deformation is still relatively small. If a consideration is given to a case where the application of a load results from an automobile collision, the prismatic portion of the vehicle body is bent to a certain extent, then is easily deformed even by a small force, and thus is deformed further at a high speed. Therefore, the aforementioned abrupt decrease in bending load is not desirable for safety reasons.

Referring to Fig. 16b, in the comparative example 2-1 in which no intermediate wall 10 is provided for the prismatic portion having a flat cross-section having a short side and a long side that is twice or more as long as the short side, it is revealed that the flexural rigidity is lower than that of the constructions provided with the intermediate wall(s) 10. This demonstrates that the installation of a suitable number of intermediate walls for a flat prismatic portion is effective in enhancing the rigidity thereof.

In the comparative examples 1-2 and 2-2 in which a material having a low elongation rate (lower than 5%) is used as the plate-shaped support element 4, high rigidity was substantially achieved as in the case of the examples for small displacement strokes. It has been revealed, however, that an abrupt decrease in bending load is highly probable for a larger displacement stroke, such as 10mm to 15mm or more as in this example. As a result of dismantling and checking samples after the test, this decrease in bending load turned out to be ascribable to the falling of the resin-molded element 3 subsequent to the fracture of the plate-shaped support element 4. This demonstrates that the use of the plate-shaped support element 4 exhibiting a high elongation rate leads to the effect of maintaining high rigidity over a long period in the course of deformation.

In the comparative examples 1-3 and 2-3 in which a material that is softer because of a lower compressive strength and a lower shearing strength is used as the resin-molded element 3, the value of bending load is held constant over a long period for changes in displacement stroke. This is considered to result from the unlikelihood of cracking in the resin-molded element 3. However, given that the absolute value of bending load is smaller in the comparative examples 1-3 and 2-3 than in the examples 1 and 2, it has been confirmed that the comparative examples 1-3 and 2-3 do not guarantee a sufficient level of safety. This demonstrates that the strength of the columnar portion can be enhanced sufficiently by setting the compression strength and shearing strength of the resin-molded element 3 sufficiently high as in the case of the invention.

## Claims

1. A body reinforcing material arrangement structure that is constructed by disposing a reinforcement in a vehicle body or a vehicular structural element formed by combining two or more panels, wherein
the reinforcement is composed of a plate-shaped support element that extends at least partially along inner faces of the panels and that is disposed apart from the panels by a predetermined distance, and of a resin-molded element that exhibits hot-state foamability and that is disposed between the panels and a portion of the plate-shaped support element which is disposed along the panels,
the resin-molded element in its pre-foaming state is supported on the plate-shaped support element and is located apart from the inner faces of the panels by a gap, and
the resin-molded element in its post-foaming state is in close contact with the panels while filling the gap between the plate-shaped support element and the panels.

2. The body reinforcing material arrangement structure according to claim 1, wherein
the inner faces of the panels, with which the resin-molded element is in close contact, is subjected to antirust liquid immersion treatment.

3. The body reinforcing material arrangement structure according to claim 1, wherein
the resin-molded element and the plate-shaped support element are integrally formed by insert molding.

4. The body reinforcing material arrangement structure according to claim 1, wherein
the resin-molded element and the plate-shaped support element are fixed to each other by engaging strips that engage them respectively.

5. The body reinforcing material arrangement structure according to claim 1, wherein
the plate-shaped support element is disposed with its position relative to the panels being regulated by the engaging strips that engage the plate-shaped support element and the panels respectively.

6. The body reinforcing material arrangement structure according to claim 5, wherein
a fixed portion of the plate-shaped support element, with which a corresponding one of the engaging strips is in engagement, is disposed apart from the panels by a gap.

7. The body reinforcing material arrangement structure according to claim 1, wherein
the plate-shaped support element and/or the resin-molded element are/is fixed to the panels by welding, bonding, or fusing.

8. The body reinforcing material arrangement structure according to claim 1, wherein
the plate-shaped support element and/or the resin-molded element are/is disposed with their/its position(s) relative to the panels being regulated by a fastening structure portion formed on the panels.

9. The body reinforcing material arrangement structure according to claim 1, wherein
the plate-shaped support element and the resin-molded element are disposed with their positions relative to the panels being regulated by engaging strips that engage the plate-shaped support element, the resin-molded element, and the vehicle body panels respectively.

10. The body reinforcing material arrangement structure according to claim 1, wherein
the resin-molded element forms at least one intermediate wall that extends between the inner faces of the panels in such a manner as to partition the interior of the vehicular structural element or the vehicle body.

11. The body reinforcing material arrangement structure according to claim 10, wherein
the at least one intermediate wall extends from a portion of the resin-molded element which is disposed along the panels to the inner faces of the panels that are opposed to that portion, the plate-shaped support element has a portion extending along both lateral faces of a portion of the resin-molded element which forms the intermediate wall, and a portion coupling those portions at an end of the intermediate wall extending toward the inner faces of the panels, and
the coupling portion is disposed apart from the inner faces of the panels by a gap.

12. The body reinforcing material arrangement structure according to claim 1, wherein
the resin-molded element has a property of foaming and expanding at a temperature of antirust liquid immersion treatment for a generally available vehicular panel.

13. The body reinforcing material arrangement structure according to claim 12, wherein
the resin-molded element has a property of foaming and expanding at a temperature of 150°C to 205°C.

14. The body reinforcing material arrangement structure according to claim 1, wherein
the resin-molded element exhibits a compressive strength equal to or higher than 10MPa and a shearing strength equal to or higher than 1MPa after having finished foaming.

15. The body reinforcing material arrangement structure according to claim 1, wherein
an adhesive force under shear between the resin-molded element and the panels is equal to or larger than 4MPa.

16. The body reinforcing material arrangement structure according to claim 1, wherein
the plate-shaped support element is constructed of a metal plate having a thickness smaller than 0.3mm and an elongation rate equal to or higher than 5% to 10%.

17. The body reinforcing material arrangement structure according to claim 1, wherein
the plate-shaped support element is made of heat-resistant resin and more greatly flexes than the resin-molded element without being destroyed.

18. The body reinforcing material arrangement structure according to claim 17, wherein
the resin constituting the plate-shaped support element is nylon 66.

19. The body reinforcing material arrangement structure according to claim 1, wherein
the plate-shaped support element is deformed in accordance with deformation of a columnar portion and the resin-molded element is held between the plate-shaped support element and the inner faces of the panels, for a sufficiently long period after formation of a crack in the resin-molded element in the course of deformation of the interior of the vehicular structural element or the vehicle body.

20. The body reinforcing material arrangement structure according to claim 19, wherein
the resin-molded element is held between the plate-shaped support element and the inner faces of the panels until the interior of the vehicular structural element or the vehicle body bends by a displacement stroke of 10mm or more, especially 20mm or more.

21. The body reinforcing material arrangement structure according to claim 1, wherein
a bending load applied to the columnar portion is held equal to or larger than 10kN for a sufficiently long period after formation of a crack in the resin-molded element in the course of deformation of the interior of the vehicular structural element or the vehicle body.

22. The body reinforcing material arrangement structure according to claim 21, wherein
the bending load applied to the interior of the vehicular structural element or the vehicle body is held equal to or larger than 10kN until the interior of the vehicular structural element or the vehicle body bends by a displacement stroke of 10mm or more, especially 20mm or more.
